Europäisches Patentamt

European Patent Office

Office européen des brevets

(11) Publication number: **0 190 865**
**B1**

(12) **EUROPEAN PATENT SPECIFICATION**

(45) Date of publication of patent specification: **08.08.90**

(21) Application number: **86300560.9**

(22) Date of filing: **28.01.86**

(51) Int. Cl.⁵: **G 11 B 15/467,**
**G 11 B 15/473**

(54) **Servo circuit for use with an information-reproducing apparatus.**

(30) Priority: **31.01.85 JP 17121/85**

(43) Date of publication of application:
**13.08.86 Bulletin 86/33**

(45) Publication of the grant of the patent:
**08.08.90 Bulletin 90/32**

(84) Designated Contracting States:
**AT DE FR GB NL SE**

(56) References cited:
**EP-A-0 113 986**
**US-A-4 044 388**
**US-A-4 254 367**

**PATENT ABSTRACTS OF JAPAN, vol. 7, no. 176**
**(P-214)1321r, 4th August 1983; & JP-A-58 80 157**
**(NIPPON DENSHIN DENWA KOSHA) 14-05-1983**

(73) Proprietor: **SONY CORPORATION**
**7-35 Kitashinagawa 6-Chome Shinagawa-ku**
**Tokyo 141 (JP)**

(72) Inventor: **Kaichi, Tatsuzawa c/o Sony**
**Corporation**
**7-35 Kitashinagawa 6-chome Shinagawa-ku**
**Tokyo (JP)**
Inventor: **Takao, Abe c/o Sony Corporation**
**7-35 Kitashinagawa 6-chome Shinagawa-ku**
**Tokyo (JP)**
Inventor: **Tetsuo, Ogawa c/o Sony Corporation**
**7-35 Kitashinagawa 6-chome Shinagawa-ku**
**Tokyo (JP)**

(74) Representative: **Ayers, Martyn Lewis Stanley**
**et al**
**J.A. KEMP & CO. 14 South Square Gray's Inn**
**London, WC1R 5EU (GB)**

Courier Press, Leamington Spa, England.

## Description

The present invention relates generally to a servo circuit and, more particularly is directed to a servo circuit suitable for use with an information signal reproducing apparatus such as a digital or analog VTR (video tape recorder) and so on.

In the first place, a prior art digital VTR and its servo circuit will be described in brief.

In the digital VTR, if a video signal to be recorded is an NTSC video signal, a video signal of one field amount is separated into five portions and this video signal is recorded on a magnetic tape by two pairs of rotary magnetic heads, each being mounted with an angular spacing of 180° therebetween, so as to form a pair of slant tracks at every 1/5 field.

Upon reproducing, in a recording and reproducing apparatus, a segment pulse of every 1/5 field formed from a reference video signal generated from a video processor and a rotation detecting signal (having a 1/5 period of the field period) from a drum motor are phase-compared and by the compared output therefrom, the drum motor is controlled in rotation to thereby apply a servo to the drum motor.

In such conventional digital VTR, however, the servo is not sufficient so that due to various unstable factors, upon reproducing, a digital data near the starting point of the slant track will not be reproduced frequently. As a result, there is a defect that the dropped-out digital data can not be corrected for error in the vertical direction and hence the error concealment is indispensable. The drop-out of such reproduced digital data can not be discovered from the original reproduced picture but can be remarkably found out from the reproduced picture based on the dubbed one.

Also in the prior art analog VTR, the servo is not satisfactory so that if a video signal on one slant track (one field amount) is reproduced while a part thereof is dropped out, this will cause the reproduced picture to be deteriorated in quality.

US—A—4044388 shows a prior art servo-control system in which synchronizing signals on the tape are compared to reference synchronising pulses and the result used to control a servo driving the drum motor of the apparatus.

According to an aspect of the present invention, there is provided a servo circuit for use with a drum motor of a reproducing apparatus wherein an information signal is reproduced from a slant track formed on a tape which is in use wrapped on a periphery of a guide drum having a rotary head, said slant track having at least one intermediate point adapted to be used as a synchronizing signal, comprising:

detecting means for detecting a said intermediate point and generating a timing signal at the detection of said intermediate point; a reference signal being provided to produce reference synchronizing pulses;

first phase comparing means for detecting the phase difference between a said timing signal and a said reference pulse;

means for generating a modified reference signal in accordance with said phase difference;

second phase comparing means for comparing the phase of the modified reference signal with that of a position indicating signal of said rotary head to generate a control signal in accordance therewith; and

means for controlling the rotation of said motor in response to said control signal, said rotary head being driven by said motor.

It is therefore possible by the present invention to provide an improved servo circuit for use with an information signal reproducing apparatus and in which an information signal recorded on a slant track of a magnetic tape, such as for a digital VTR (video tape recorder) and an analog VTR, can be positively reproduced without dropout.

These and other objects, features and advantages of the present invention will become apparent from the following detailed description of the preferred embodiment taken in conjunction with the accompanying drawings.

Fig. 1 is a block diagram showing an embodiment of a servo circuit according to the present invention;

Figs. 2 and 3 are respectively pattern diagrams showing track patterns formed on a magnetic tape;

Figs. 4 and 5 are diagrams showing formats of a synchronizing (sync.) block, respectively; and

Fig. 6 is a block diagram showing another embodiment of a processor according to the present invention.

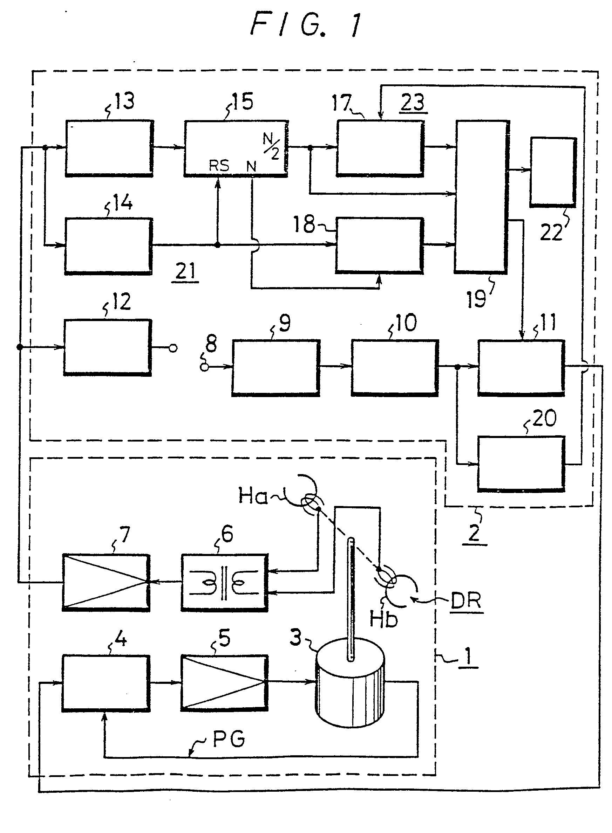

Now, an embodiment of a servo circuit according to the present invention will hereinafter be described in detail with reference to Fig. 1, in which this invention is applied to a digital VTR.

In Fig. 1, reference numeral 1 designates a recording and reproducing apparatus and reference numeral 2 designates a processor. The recording and reproducing apparatus 1 and the processor 2 are connected with each other via a cable.

The recording and reproducing apparatus 1 will be described first. In the recording and reproducing apparatus 1, reference letter DR designates a tape guide drum apparatus, and though a fixed drum and a rotary drum are not shown, reproducing rotary magnetic heads Ha and Hb are mounted to its rotary drum with an angular spacing of 180° therebetween. Each of these rotary magnetic heads Ha and Hb is formed of magnetic heads of 2, channels which are provided in close relation to each other. In this case, other rotary magnetic heads, such as, recording rotary magnetic heads and so on are not shown. Reference numeral 3 designates a drum motor which directly drives the rotary drum to rotate.

Reproduced signals from the reproducing rotary magnetic heads Ha and Hb are supplied through a rotary transormer 6 to an amplifier 7. The output from the amplifier 7 is fed to the processor 2. The amplifier 7 may be incorporated in the rotary drum and in that case, the amplifier 7 is located at the prior stage of the rotary transformer 6.

A rotation detecting signal (having the same period as the period (1/5 field period) of a reference signal generated from every slant track when the drum motor 3 is rotated at the normal speed) generated from a pulse generator (not shown) mounted on the drum motor 3 (or the rotary drum) and an output signal from a phase modulating circuit 11 in the processor 2, which will be described later, are supplied to and phase-compared in a phase comparator circuit 4. The compared output from the phase comparator circuit 4 is supplied through an amplifier 5 to the drum motor 3 to thereby apply the servo to the drum motor 3.

While this recording and reproducing apparatus 1 additionally includes a capstan apparatus, a servo circuit thereof, a loading mechanism for winding a magnetic tape, incorporated in a tape cassette, around a tape guide drum and disengaging the same therefrom, a tape running guide mechanism and so on, they will not be shown and described.

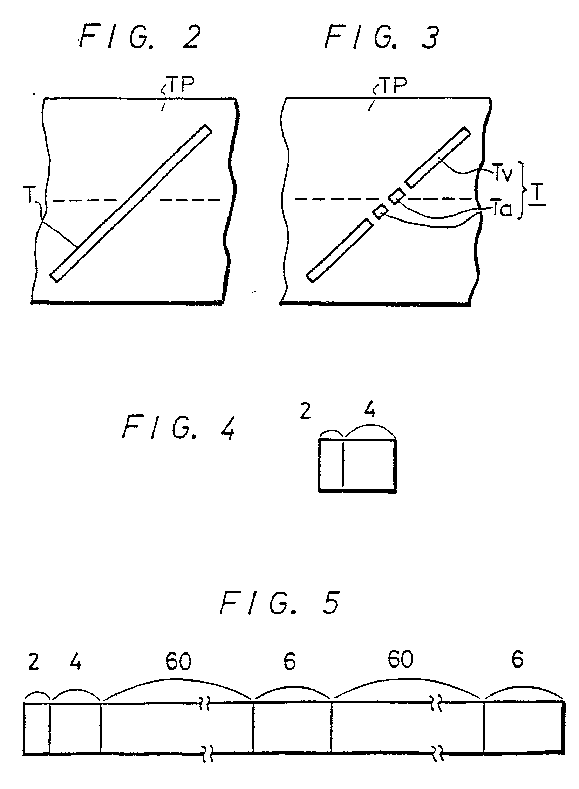

Prior to describing the processor 2, a track pattern on a magnetic tape TP and a format of a digital video signal recorded thereon will be described with reference to Figs. 2 to 5. In Fig. 2, reference letter $T$ designates one slant track on which a pair of video signal data and of 1/5 field amount are recorded.

On one slant track, there is recorded a digital data which is formed of, for example, 330 sync. blocks. At the starting point of the slant track T, as shown in Fig. 4, there are assigned a block synchronizing signal (block sync.) of original 2 bytes and a leading sync. block formed of a dummy pattern of 4 bytes succeeding the former. Thereafter, a normal sync. block is assigned repeatedly. The normal sync. block is formed of an original block synchronizing signal (block sync.) of 2 bytes, a block address of 4 bytes following thereto, a data (component video data) of 60 bytes, a parity of 6 bytes, a data (component video data) of 60 bytes and a parity of 6 bytes in this sequential order as shown in Fig. 5.

When an even number of audio tracks Ta are interposed at a middle portion of a video track Tv of the slant track T as shown in Fig. 3, the block construction of the recording digital data is the same way as described in connection with Figs. 4 and 5 except for the fact that the audio data is inserted into a part of the video data.

Turning back to Fig. 1, the processor 2 will be described. Referring to Fig. 1, a reference video signal from the outside is supplied through an input terminal 8 to a synchronizing detecting circuit 9 in which the horizontal and vertical synchronizing signals are detected. The detected output therefrom is supplied to a segment pulse generating circuit 10 which generates a segment pulse (pulse generated at every slant track and which has 1/5 field period when the video signal is of the NTSC system). The segment pulse thus generated by the segment pulse generating circuit 10 is fed to a phase modulating circuit 11.

The reproduced output from the amplifier 7 of the recording and reproducing apparatus 1 is supplied to a video reproducing circuit 12 and a sync. data detecting circuit 13 and a track starting point detecting circuit 14 which constitute a timing detector means 21 in the processor 2.

Subsequently, the timing detector means 21 for detecting a substantially intermediate point of the slant track T will be described. In the sync. data detecting circuit 13, the block synchronizing signal (sync. block) is detected from the reproduced signal and the detected block synchronizing signal is fed to and counted by a counter 15. The counted result from the counter 15 is supplied to a processing circuit 19.

In the track starting point detecting circuit 14, the dummy pattern of the leading sync. block shown in Fig. 4 is detected to thereby detect the starting point of the slant track T. The detected output therefrom is supplied to the counter 15 as a reset signal.

Since each of the rotary magnetic heads Ha and Hb is formed of magnetic heads of 2 channels, it is sufficient that a reproduced output from the magnetic head of one channel of either the rotary magnetic head Ha or Hb is supplied to the sync. data detecting circuit 13 and to the track start point detecting circuit 14.

If the predetermined number of the block sync. signals on the slant track T is taken as N (for example, an even number), the counter 15 generates a timing pulse when it counts N/2 ((N±1)/2 when N is an odd number) block sync. signals from the sync. data detecting circuit 13, including the block sync. signal of the leading sync. block, and supplies the same to a phase comparator circuit 17 which constructs an error detecting means 23. On the other hand, the segment pulse from the segment pulse generating circuit 10 is supplied to a delay circuit 20 which constructs the error detecting means 23 in which the segment pulse is delayed by a predetermined time equal to or slightly longer than 1/2 of the period of the segment pulse so as to make the segment pulse coincident with the normal timing of the timing pulse which is generated when the counter 15 counts N/2 block synchronizing signals. The segment pulse thus delayed is supplied to the phase comparator circuit 17 and phase-compared with the timing pulse which is generated when the counter 15 counts the N/2 of the block synchronizing signals. The compared output from the phase comparator circuit 17 is fed to the processing circuit 19.

The leading sync. block detecting pulse from the track start point detecting circuit 14 and a detecting signal indicative of N block synchronizing signals of one slant track counted by the counter 15 are supplied to and then latched in a latch circuit 18.

In the processing circuit 19, when the leading sync. block is detected and the number X of the block synchronizing signals contained in one slant track is judged to be equal to N, the fact is displayed on an indicator 22. Also, the compared output from the phase comparator circuit 17 is, as it is, fed to the phase modulating circuit 11 to thereby phase-modulate the segment pulse.

Further, in the processing circuit 19, if the leading sync. block is not detected or if it is judged that the number X of the block synchronizing signals contained in one slant track is not equal to N or that any conditions are not satisfied, such fact is displayed on the indicator 22 and also the compared output from the phase comparator circuit 17 is corrected by the correction amount corresponding to each state and then fed to the phase modulating circuit 11.

Furthermore, when the tape is started to run or when the video signal is reproduced with a variable tape speed, the counter 15 does not generate the timing pulse which is normally generated from the counter 15 when it counts N/2 block synchronizing signals. Therefore, at that time, instead of the timing pulse, a dummy pulse is generated by the processing circuit 19 and is then fed to the phase modulating circuit 11. This is displayed on the indicator 22.

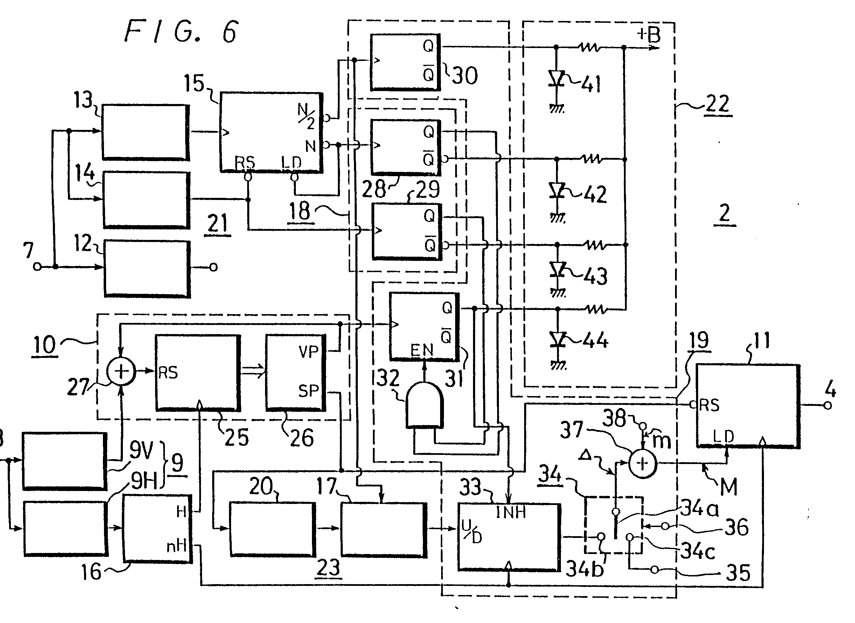

Another embodiment of the processor 2 according to the present invention will be described with reference to Fig. 6. In Fig. 6, like parts corresponding to those of Fig. 1 are marked with the same references and will not be described. Referring to Fig. 6, a horizontal synchronizing signal from a horizontal synchronizing signal detecting circuit 9H which constructs the sync. data detecting circuit 9 is supplied to a PLL (phase locked loop) circuit 16 which generates a horizontal frequency signal and a clock signal with the frequency n times the frequency of the horizontal frequency signal. In this case, n is selected to be a value ranging, for example, from about 100 to 300.

The segment pulse generating circuit 10 is formed of an address counter 25, a PROM (programmable read only memory) 26 and a synthesizer or composer 27. The PROM 26 generates a vertical pulse and a segment pulse on the basis of an address signal from the address counter 25. A vertical synchronizing signal from a vertical synchronizing signal detecting circuit 9V in the sync. data detecting circuit 9 and the vertical pulse from the PROM 26 are supplied through the composer 27 to the address counter 25 as a reset pulse. The address counter 25 counts the horizontal frequency signal derived from the PLL 16 and is reset by the above mentioned reset pulse.

The counter 15 is constructed such that when it counts N block synchronizing signals, the counted number N is loaded thereto.

The latch circuit 18 includes retriggerable mono-multivibrators (sub-stable period thereof is set to be slightly longer than the period of the segment pulse) 28 and 29 which are respectively supplied with the detecting signal generated from the counter 15 when it counts the N block synchronizing signals and the leading sync. block detecting pulse derived from the track start point detecting circuit 14.

Then, the processing circuit 19 will be described, in which reference numeral 30 designates a retriggerable mono-multivibrator similar to the aforesaid retriggerable mono-multivibrators 29 and 29. This retriggerable mono-multivibrator 30 receives the detecting signal generated from the counter 15 when it counts N/2 block synchronizing signals. Other retriggerable mono-multivibrator 31 is provided (the sub-stable period thereof is set to be slightly longer than several times the vertical period) by way of example and this retriggerable mono-multivibrator 31 receives the vertical pulse from the segment pulse generating circuit 10. Both the Q outputs from the retriggerable mono-multivibrators 28 and 29 are supplied to an AND circuit 32 in the processing circuit 19 and the output therefrom is supplied to an enable signal input terminal EN of the retriggerable mono-multivibrator 31.

Other circuit elements of the processing circuit 19 will be described. Reference numeral 33 designates a up-down counter which counts the clock signal derived from the PLL 16. The up-down counter 33 is controlled in its up-and-down counting by the compared output from the phase comparator circuit 17. Also, the up-down counter 33 is inhibited from counting the clock signal when the Q output from the retriggerable mono-multivibrator 31 becomes low in level and then it keeps the counted value at that time. When the phase of the N/2 detecting signal from the counter 15 is advanced from that of the segment pulse from the delay circuit 20, the compared output from the phase comparing circuit 17 becomes high in level so that the up-down counter 33 is set in the up-counting mode; while, when the phase of the N/2 detecting signal is delayed or is equal to that of the segment pulse, the compared output from the phase comparing circuit 17 becomes low in level so that the counter 15 is placed in the down-counting mode.

Reference numeral 34 designates a changeover switch in which the counted value from the up-down counter 33 is supplied to one fixed contact 34b thereof, a zero value from an input terminal 35 is supplied to another fixed contact 34c thereof, and the output from its movable contact piece 34a is supplied to an adder 37. The switch 34 is controlled by a control signal from an input terminal 36, such that the movable contact piece 34a is normally switched to the fixed contact 34b, while when the recording and reproducing apparatus 1 is driven for a playback mode or different speed playback mode, the movable contact piece 34a is connected to the fixed contact 34c.

The phase modulating circuit 11 will be described. This phase modulating circuit 11 is formed of a variable counter for counting the clock signal from the PLL 16 and which is reset by the segment pulse from the PROM 26. Also, an added value M from an adder 37 is loaded to a load terminal LD thereof in which an initial value M is set, and each time this variable counter counts (K−M) clock signals (K is the counted value of the counter 11), it generates the pulse. In accordance therewith, a constant $m$ is supplied to the adder 37 from an input terminal 38 and a variable $\Delta$ is supplied to the adder 37 from the switch 34. Accordingly, $M$ is presented as

$$M = m + \Delta$$

The indicator 22 will be described. The indicator 22 is provided with light emission diodes (hereinafter simply referred to as LEDs) 41 to 44 of, for example, blue, red, red and blue colors. A power supply source +B is adapted to drive the LEDs 41 to 44. The LED 41 is controlled by the retriggerable mono-multivibrator 30 so that when the intermediate point of the slant track T is detected, the Q output of the retriggerable mono-multivibrator 30 becomes high in level whereby the LED 41 is made to flash. Further, the LEDs 42 and 43 are respectively controlled by the retriggerable mono-multivibrators 28 and 29 such that when the track end point and the track start point of the slant track T are not detected, the $\overline{Q}$ outputs thereof become high in level whereby the LEDs 42 and 43 are made to flash. The remaining LED 44 is controlled by the retriggerable mono-multivibrator 31 such that when the track start point and the track end point of the slant track T are both detected and when the vertical pulse from the PROM 26 is generated once or more during the sub-stable period of the retriggerable mono-multivibrator 31, the Q output of the retriggerable mono-multivibrator 31 becomes high in level whereby the LED 44 is made to flash. At the same time, the up-down counter 33 is moved from the counting state to the hold state and then the counted value is held therein. On the other hand, when the Q output of the retriggerable mono-multivibrator 31 becomes low in level, the up-down counter 33 is moved from the hold state to the counting state and thus the servo-control is started again.

Although the processor 2 is provided with a video recording circuit and other signal processing circuits, they will not be shown and explained.

Furthermore, the present invention is not limited to be applied to the digital VTR but can be applied to the analog VTR. In addition, a signal to be recorded and reproduced is not limited to the video signal but an audio signal (PCM (pulse code modulated) signal), a digital data signal and so on may be used.

According to the present invention as set forth above, it is possible to obtain a servo circuit for use with an information signal reproducing apparatus which can servo-control the drum motor so that the information recorded on the slant track of the magnetic tape can be positively reproduced without a drop-out.

**Claims**

1. A servo circuit for use with a drum motor (3) of a reproducing apparatus wherein an information signal is reproduced from a slant track (T) formed on a tape which is in use wrapped on a periphery of a guide drum (DR) having a rotary head (Ha, Hb), said slant track having at least one intermediate point adapted to be used as a synchronizing signal, comprising:

detecting means (21) for detecting a said intermediate point and generating a timing signal at the detection of said intermediate point; a reference signal (8) being provided to produce reference synchronizing pulses;

first phase comparing means (11) for detecting the phase difference between a said timing signal and a said reference pulse;

means (11) for generating a modified reference signal in accordance with said phase difference;

second phase comparing means (4) for comparing the phase of the modified reference signal with that of a position indicating signal (PG) of said rotary head to generate a control signal in accordance therewith; and

means (3, 4, 5) for controlling the rotation of said motor (3) in response to said control signal, said rotary head being driven by said motor.

2. A servo circuit according to claim 1, in which said detecting means (21) comprises a circuit (14) for detecting a starting point of said slant track, a circuit (13) for separating a synchronzing signal from the reproduced information signal and counter means (15) for counting said synchronizing signal from said separating circuit (13) after reset of said counter means by an output of said starting point detecting circuit (14).

3. A servo circuit according to claim 1 or 2, in which said information signal comprises N blocks of digital data which are recorded in one slant track (T), each of said blocks having a block synchronizing signal preceding said digital data, wherein said counter means counts the number of said block synchronising signals separated by said separating means (13) and is adapted to produce an output signal when said count reaches N/2.

4. A servo circuit according to claim 1, 2 or 3, in which said first phase comparing means (23, 11) comprises a phase comparator (17) for detecting the phase difference between said timing signal and said reference pulse and means (11) for phase-modulating said reference pulse in accordance with said phase difference to provide the phase-modulated reference pulse as said control signal.

5. A servo circuit according to claim 4, in which said first phase comparing means (23, 11) further comprises an up-down counter (33) which counts a clock signal having a predetermined frequency and which generates a counting value corresponding to said phase difference.

6. A servo circuit according to claim 5, in which said phase-modulating means (11) comprises a presettable counter (11) having a load terminal (10) to which said counting value from said up-down counter (33) is loaded, said clock signal being counted from the loaded counting value to the maximum value in said presettable counter.

7. A servo circuit according to claim 6, in which said comparing means further comprises a reference pulse generator (9, 10) comprising a circuit (9) for separating vertical and horizontal synchronizing signals from a reference video signal (8), an address counter (25) for counting said horizontal synchronizing signal, said address counter being reset by said vertical synchronizing signal, and a programmable read only memory (26) connected to an output of said address counter (25) for generating said reference pulse when said address counter counts said horizontal synchronizing signal up to a predetermined value.

## Patentansprüche

1. Servoschaltung für den Trommelmotor (3) eines Wiedergabegeräts, in dem von einer auf einem Band aufgezeichneten Schrägspur (T) ein Informationssignal wiedergegeben wird, wobei das Band im Betrieb um die Umfangsfläche einer mit einem rotierenden Kopf (Ha, Hb) ausgestatteten Führungstrommel (DR) geschlungen ist und wobei die Schrägspur wenigstens einen als Synchronisiersignal verwendbaren Zwischenpunkt aufweist,

mit einer Detektoreinrichtung (21) zur Erfassung des Zwischenpunkts und zur Erzeugung eines Zeitsignals bei der Erfassung des Zwischenpunkts, wobei ein Referenzsignal (8) zur Erzeugung von Referenz-Synchronisierimpulsen vorgesehen ist,

mit einer ersten Phasenvergleichereinrichtung (11) zur Erfassung der Phasendifferenz zwischen dem Zeitsignal und einem Referenzimpuls, mit Mitteln (11) zur Erzeugung eines modifizierten Referenzsignals entsprechend der Phasendifferenz,

mit einer zweiten Phasenvergleicherrichtung (4) zum Vergleichen der Phase des modifizierten Referenzsignals mit der Phase eines Positionsanzeigesignals (PG) des rotierenden Kopfes zur Erzeugung eines entsprechenden Steuersignals

sowie mit Mitteln (3, 4, 5) zur Drehsteuerung des Motors (3) in Abhängigkeit von dem Steuersignal, wobei der Motor den rotierenden Kopf antreibt.

2. Servoschaltung nach Anspruch 1, bei der die Detektoreinrichtung (21) eine Schaltung (14) zur Erfassung des Startpunkts der Schrägspur aufweist, ferner eine Trennschaltung (13) zum Abtrennen eines Synchronisiersignals aus dem wiedergegebene Informationssignal sowie eine Zähleinrichtung (15) zum Abzählen des von der Trennschaltung (13) abgegebenen Synchronisiersignals nach Rückstellung der Zähleinrichtung durch ein Steuersignal der Schaltung (14) zur Erfassung des Startpunkts.

3. Servoschaltung nach Anspruch 1 oder 2, bei der das Informationssignal N Blöcke von digitalen Daten enthält, die in einer Schrägspur (T) aufgezeichnet sind, wobei jeder dieser Blöcke ein den digitalen Daten vorangestelltes Blocksynchronisiersignal enthält und wobei die Zähleinrichtung die Anzahl der von der Trennschaltung (13) abgetrennten Blocksynchronisiersignale zählt und ein Steuersignal erzeugt, wenn der Zählstand den Wert N/2 erreicht.

4. Servoschaltung nach Anspruch 1, 2 oder 3, der bei die erste Phasenvergleichereinrichtung (23, 11) einen Phasenkomparator (17) zur Erfassung der Phasendifferenz zwischen dem Zeitsignal und dem Referenzimpuls enthält sowie Mittel (11) zur Phasenmodulation des Referenzimpulses nach Maßgabe der genannten Phasendifferenz, wobei diese Mittel (11) den phasenmodulierten Referenzimpuls als das genannte Steuersignal abgeben.

5. Servoschaltung nach Anspruch 4, bei der die erste Phasenvergleichereinrichtung (23, 11) ferner einen Vorwärts/Rückwärts-Zähler (33) aufweist, der ein Taktsignal mit vorbestimmter Frequenz zählt und einen Zählwert erzeugt, der der genannten Phasendifferenz entspricht.

6. Servoschaltung nach Anspruch 5, bei der die Mittel (11) zur Phasenmodulation einen voreinstellbaren Zähler (11) umfassen, der einen Lade-Eingang (10) aufweist, über den der genannte Zählwert des Vorwärts/Rückwärts-Zählers (33) geladen wird, wobei das Taktsignal in dem voreinstellbaren Zähler von dem so geladenen Zählwert an bis zum maximalen Zählwert gezählt wird.

7. Servoschaltung nach Anspruch 6, bei der die Vergleichereinrichtung ferner einen Referenzimpulsgenerator (9, 10) aufweist mit einer Schaltung (9) zum Abtrennen von Vertikal- und Horizontal-Synchronisiersignalen von einem Referenz-Videosignal (8), einen Adressenzähler (25) zum Abzählen des Horizontal-Synchronisiersignals, der von dem Vertikal-Synchronisiersignal zurückgestellt wird, sowie einen mit einem Ausgang des Adressenzählers (25) verbundenen programmierbaren Nurlesespeicher (26) zur Erzeugung des Referenzimpulses, wenn der Adressenzähler (25) das Horizontal-Synchronisiersignal bis zu einem vorbestimmten Wert zählt.

## Revendications

1. Circuit d'asservissement à utiliser avec un moteur de tambour (3) d'un appareil de reproduction dans lequel un signal d'information est reproduit à partir d'une piste oblique (T) formée sur une bande qui, en fonctionnement, est enroulée sur une périphérie d'un tambour de guidage (DR) comportant une tête tournante (Ha, Hb), la piste oblique comportant au moins un point intermédiaire adapté pour servir de signal de synchronisation, comprenant:

un moyen de détection (21) pour détecter le point intermédiaire et engendrer un signal de synchronisation à la détection du point intermédiaire; un signal de référence (8) étant fourni pour produire des impulsions de synchronisation de référence;

un premier moyen comparateur de phases (11) pour détecter le déphasage entre le signal de synchronisation et une impulsion de référence;

un moyen (11) pour engendrer un signal de référence modifié selon le déphasage;

un deuxième moyen comparateur de phases (4) pour comparer la phase du signal de référence modifié à celle d'un signal indicateur de position (PG) de la tête tournante afin d'engendrer un signal de commande selon celle-ci; et

un moyen (3, 4, 5) pour contrôler la rotation du moteur (3) en réponse au signal de commande, la tête tournante étant entraînée par le moteur.

2. Circuit d'asservissement selon la revendication 1, dans lequel le moyen de détection (21) comprend un circuit (14) pour détecter un point de début de la piste oblique, un circuit (13) pour séparer un signal de synchronisation du signal d'information reproduit et un moyen compteur (15) pour compter le signal de synchronisation provenant du circuit séparateur (13) après la remise à zéro du moyen compteur par un signal de sortie du circuit détecteur de point de début (14).

3. Circuit d'asservissement selon l'une quelconque des revendications 1 et 2, dans lequel le signal d'information comprend N blocs de données numériques qui sont enregistrées sur une piste oblique (T), chacun des blocs comportant un signal de synchronisation de bloc précédant les données numériques, dans lequel le moyen compteur compte le nombre des signaux de synchronisation de bloc séparés par le moyen séparateur (13) et est agencé pour produire un signal de sortie quand le compte atteint la valeur N/2.

4. Circuit d'asservissement selon l'une quelconque des revendications 1 à 3, dans lequel le premier moyen comparateur de phases (23, 11) comprend un omparateur de phases (17) pour détecter le déphasage entre le signal de synchronisation et l'impulsion de référence et un moyen (11) pour moduler en phase l'impulsion de référence selon le déphasage pour fournir l'impulsion de référence modulée en phase comme signal de commande.

5. Circuit d'asservissement selon la revendication 4, dans lequel le premier moyen comparateur de phases (23, 11) comprend en outre un compteur-décompteur (33) qui compte un signal d'horloge ayant une fréquence prédéterminée et qui génère une valeur de comptage correspondant au déphasage.

6. Circuit d'asservissement selon la revendication 5, dans lequel le moyen modulateur de phase (11) comprend un compteur préréglable (11) ayant une borne de chargement (10) où est chargée la valeur de comptage provenant du compteur-décompteur (33), le signal d'horloge étant compté de la valeur de comptage chargée à la valeur maximale dans le compteur préréglable.

7. Circuit d'asservissement selon la revendication 6, dans lequel le moyen comparateur comprend en outre un générateur d'impulsions de référence (9, 10) comprenant un circuit (9) pour séparer les signaux de synchronisations verticale et horizontale d'un signal vidéo de référence (8), un compteur d'adresse (25) pour compter le signal de synchronisation horizontale, le compteur d'adresse étant remis à zéro par le signal de synchronisation verticale, et une mémoire morte programmable (26) connectée à une sortie du compteur d'adresse (25) pour engendrer l'impulsion de référence quand le compteur d'adresse compte le signal de synchronisation horizontale jusqu'à une valeur prédéterminée.

# F I G. 1

## FIG. 2

## FIG. 3

## FIG. 4

## FIG. 5

F I G. 6